# EUROPÄISCHE PATENTSCHRIFT

(11) **EP 3 610 411 B1**
(45) Veröffentlichungstag und Bekanntmachung des Hinweises auf die Patenterteilung: **18.12.2024**
(21) Anmeldenummer: 18740749.9
(22) Anmeldetag: 04.07.2018
(51) Int. Cl.: G06V 10/141, G06V 20/56

(54) **STEUERN EINES PIXELSCHEINWERFERS EINES AUF EINEM FAHRWEG ANGEORDNETEN KRAFTFAHRZEUGS**
CONTROLLING A PIXEL HEADLIGHT OF A MOTOR VEHICLE DISPOSED ON A DRIVING LANE
COMMANDE D'UN PROJECTEUR À PIXELS D'UN VÉHICULE AUTOMOBILE DISPOSÉ SUR UNE VOIE DE CIRCULATION

(30) Priorität: 05.07.2017 DE 102017211430
(43) Veröffentlichungstag der Anmeldung: 19.02.2020
(73) Patentinhaber: Audi AG, 85045 Ingolstadt (DE)
(72) Erfinder: NEUKAM, Johannes, 91257 Pegnitz (DE)
(74) Vertreter: Hofstetter, Schurack & Partner
(86) Internationale Anmeldenummer: PCT/EP2018/068106
(87) Internationale Veröffentlichungsnummer: WO 2019/008045

(56) Entgegenhaltungen:
- CN-A- 102 887 108
- DE-A1- 102008 039 091
- US-A1- 2016 371 983
- US-A1- 2016 371 983
- TAMBURO ROBERT ET AL: "DMDs for smart headlights", PROCEEDINGS OF SPIE, IEEE, US, vol. 8979, 7 March 2014 (2014-03-07), pages 89790F - 89790F, XP060034751, ISBN: 978-1-62841-730-2, DOI: 10.1117/12.2053788
- TAMBURO ROBERT ET AL: "DMDs for smart headlights", PROCEEDINGS OF SPIE, IEEE, US, vol. 8979, 7 March 2014 (2014-03-07), pages 89790F - 89790F, XP060034751, ISBN: 978-1-62841-730-2, DOI: 10.1117/12.2053788
- TAMBURO ROBERT ET AL: "DMDs for smart headlights", VISUAL COMMUNICATIONS AND IMAGE PROCESSING; 20-1-2004 - 20-1-2004; SAN JOSE,, vol. 8979, 7 March 2014 (2014-03-07), pages 89790F - 89790F, XP060034751, ISBN: 978-1-62841-730-2, DOI: 10.1117/12.2053788

## Beschreibung

Die Erfindung betrifft ein Verfahren zum Steuern eines Pixelscheinwerfers eines auf einem Fahrweg angeordneten Kraftfahrzeugs, bei dem der Pixelscheinwerfer abhängig von einem eine Bildfolge repräsentierenden Steuersignal Licht abgibt, um den Fahrweg zumindest teilweise zu beleuchten, wobei ein jeweiliges einzelnes Bild der Bildfolge einer jeweiligen aktuell durch den Pixelscheinwerfer bereitzustellenden Lichtverteilung entspricht, der beleuchtete Fahrweg mittels einer Fahrzeugkamera erfasst wird, die entsprechende Kameradaten bereitstellt, und die Kameradaten ausgewertet werden, um wenigstens eine hinweisgebende Fahrwegausstattung zu ermitteln und das Steuersignal zum Steuern des Pixelscheinwerfers abhängig von der ermittelten hinweisgebenden Fahrwegausstattung bereitzustellen. Die Erfindung betrifft ferner eine Steuereinrichtung zum Steuern eines Pixelscheinwerfers eines auf einem Fahrweg angeordneten Kraftfahrzeugs, mit einer Steuersignaleinheit, die ausgebildet ist, ein eine Bildfolge repräsentierendes Steuersignal für den Pixelscheinwerfer zum Beleuchten des Fahrwegs des Kraftfahrzeugs bereitzustellen, sodass der Pixelscheinwerfer Licht abgibt, um den Fahrweg zumindest teilweise zu beleuchten, wobei ein jeweiliges einzelnes Bild der Bildfolge einer jeweiligen aktuell durch den Pixelscheinwerfer bereitzustellenden Lichtverteilung entspricht, einer Empfangseinheit zum Empfangen von Kameradaten einer den beleuchteten Fahrweg erfassende und die Kameradaten bereitstellende Fahrzeugkamera, und einer an die Steuersignaleinheit und die Empfangseinheit angeschlossene Auswerteeinheit zum Auswerten der Kameradaten, um wenigstens eine hinweisgebende Fahrwegausstattung zu ermitteln, damit die Steuersignaleinheit das Steuersignal abhängig von der ermittelten hinweisgebenden Fahrwegausstattung bereitstellt. Schließlich betrifft die Erfindung auch ein Kraftfahrzeug mit einer Fahrzeugkamera, einem Pixelscheinwerfer und einer Steuereinrichtung zum Steuern des Pixelscheinwerfers.

Verfahren zum Beleuchten der Fahrzeugumgebung des Kraftfahrzeugs, Steuereinrichtungen zum Steuern des Pixelscheinwerfers des Kraftfahrzeugs sowie auch Kraftfahrzeuge der gattungsgemäßen Art sind im Stand der Technik umfänglich bekannt. Kraftfahrzeuge weisen Scheinwerfer, insbesondere Kraftfahrzeugscheinwerfer auf, mittels denen die Fahrzeugumgebung des Kraftfahrzeugs, insbesondere der Fahrweg, auf dem das Kraftfahrzeug angeordnet ist, beleuchtet werden kann. Die Beleuchtung dient dazu, einerseits bei ungünstigen Sichtverhältnissen, insbesondere bei Dunkelheit, zum einen eine gute Sichtbarkeit des Kraftfahrzeugs für weitere Verkehrsteilnehmer zu ermöglichen, und andererseits unter anderem eine Beleuchtung des Fahrwegs beziehungsweise der Fahrbahn zu ermöglichen, um dem Fahrer des Kraftfahrzeugs ein sicheres Führen des Kraftfahrzeugs auf dem Fahrweg zu ermöglichen. Darüber hinaus ist die Beleuchtung, die mittels des Kraftfahrzeugs bereitzustellen ist, durch gesetzliche Vorschriften sowie Normen geregelt.

Ein Kraftfahrzeug der gattungsgemäßen Art ist ein Fahrzeug, welches mittels einer Antriebseinrichtung im bestimmungsgemäßen Fahrbetrieb angetrieben sein kann. Die Antriebseinrichtung kann eine Antriebseinrichtung sein, die eine Verbrennungskraftmaschine oder auch eine elektrische Maschine umfasst. Natürlich können auch Kombinationen hiervon vorgesehen sein. Das Kraftfahrzeug ist vorzugsweise ein Kraftwagen, insbesondere ein Personenkraftwagen.

Moderne Kraftfahrzeuge weisen einen oder mehrere Pixelscheinwerfer auf, mittels denen in hochflexibler Weise Lichtverteilungen zum Beleuchten der Fahrzeugumgebung, insbesondere des Fahrwegs, bereitgestellt werden können. So können beispielsweise vorgegebene Lichtverteilungen erzeugt und bereitgestellt werden, die zum Beispiel eine Fahrbahn des Fahrwegs, auf dem das Kraftfahrzeug geführt wird, beleuchten. Aber auch die weitere Umgebung des Kraftfahrzeugs kann mittels des Pixelscheinwerfers beleuchtet sein.

Ein Pixelscheinwerfer ist ein Scheinwerfer, der aufgrund seiner Konstruktion in hochflexibler Weise Lichtverteilungen bereitzustellen vermag. Zu diesem Zweck kann er beispielsweise basierend auf Leuchtdioden ausgebildet sein, die nach Art einer Matrix im Scheinwerfer angeordnet sind. Abhängig von der mittels des Steuersignals vorgebbar bereitzustellenden Lichtverteilung werden die Leuchtdioden mittels einer Scheinwerfersteuerung mit elektrischer Energie beaufschlagt, um entsprechend Licht zu emittieren. Darüber hinaus können auch Laserscheinwerfer als Pixelscheinwerfer vorgesehen sein, die einen Konversionsstoff aufweisen, der bei Beaufschlagung mit einem Laserlicht Konversionslicht emittiert. Durch entsprechende Beaufschlagung des Konversionsstoffs an unterschiedlichen Stellen mit gegebenenfalls unterschiedlicher Lichtstärke des Laserlichts kann eine nahezu beliebige Lichtverteilung erreicht werden. Natürlich können auch entsprechende Kombinationen von solchen Scheinwerferkonzepten vorgesehen sein.

Darüber hinaus umfassen moderne Kraftfahrzeuge Fahrzeugkameras, um zum Beispiel ein autonomes Fahren zu ermöglichen und/oder auch Fahrerassistenzsysteme mit erforderlichen Daten zu versorgen. In Kombination mit Pixelscheinwerfern können so zum Beispiel entgegenkommende Objekte, insbesondere entgegenkommende Kraftfahrzeuge, erfasst werden und die Lichtverteilung, die mit dem Pixelscheinwerfer bereitgestellt wird, entsprechend angepasst werden, um die entsprechenden erfassten Objekte möglichst nicht zu blenden.

So offenbart beispielsweise die DE 10 2014 000 935 A1 ein Verfahren und eine Anordnung zur Erzeugung eines Fahrbahnlichtdisplays für Fahrzeuge. Hiermit sollen projizierbare Informationen auf einer Oberfläche für den Fahrer des Fahrzeugs möglichst verzerrungsfrei dargestellt werden können.

Darüber hinaus offenbart die DE 10 2011 081 396 A1 ein Verfahren und ein Steuergerät zum Anpassen einer Abstrahlcharakteristik eines Scheinwerfers. Es soll ein hervorzuhebendes Objekt ermittelt und die Abstrahlcharakteristik des Scheinwerfers so eingestellt werden, dass das Objekt mittels des Scheinwerfers hervorgehoben beleuchtet wird.

Weiterhin offenbart die DE 10 2015 207 543 A1 eine Vorrichtung und ein Verfahren zum Steuern eines Fahrzeugscheinwerfers eines Kraftfahrzeugs, womit die Beleuchtung einer Fahrbahn automatisch angepasst werden soll, um entgegenkommende Verkehrsteilnehmer nicht zu blenden.

Weiterhin offenbart die DE 10 2012 003 158 A1 ein Verfahren und eine Vorrichtung zum Projizieren eines Laserlichtbilds in eine Umgebung um ein Fahrzeug.

Schließlich offenbart die DE 10 2010 029 194 B4 ein Verfahren und ein Steuergerät zum Plausibilisieren eines Leuchtweite-Testwerts eines Lichtkegels eines Fahrzeugscheinwerfers.

Auch wenn sich der Stand der Technik bewährt hat, verbleibt dennoch Verbesserungsbedarf.

Moderne Scheinwerfer in Fahrzeugen sind als Pixelscheinwerfer ausgebildet und beleuchten einen Bereich vor dem Fahrzeug. Ab- und zuschaltbare Sonderfunktionen, wie Nebelscheinwerfer oder dergleichen sind neben komplexeren Techniken, wie Matrixbeleuchtung der Stand der Technik. Ferner ist bereits bekannt, dass hochauflösende Scheinwerfer geplant und entwickelt werden, die große Genauigkeit, Matrixfunktionalität und die Abbildung von Motiven auf der Fahrbahn erlauben. Linien, die die Breite des Fahrzeugs darstellen und Abbildungen zum möglichen Bremsweg sind neben eingeblendeten Fußgängerstreifen im Gespräch. Dabei wird der Scheinwerfer oder seine Scheinwerfersteuerung mittels eines Steuersignals unter Berücksichtigung von Daten aus dem Fahrzeug, wie Lenkwinkel, Geschwindigkeit und fest programmierte Werte wie eine Fahrzeugbreite und/oder dergleichen, gesteuert.

Auf den heutigen Straßen sind viele Markierungen auf der Fahrbahn aufgebracht, die den Verkehr lenken und steuern sollen.

Markierungen, die mittels hochauflösender Scheinwerfer auf die Fahrbahn projiziert werden, sind abgesehen von den Matrixfunktionen statisch. Die Fahrzeugkamera kann verwendet werden, um eine korrekte Darstellung zu gewährleisten, aber alle Funktionen sind Markierungen, die zusätzlich für den Fahrer des Kraftfahrzeugs visuell erkennbar eingeblendet werden. Sind bereits Markierungen auf der Fahrbahn fest angebracht, so überlagern sich die projizierten Markierungen mit den fest vorhandenen.

Beispielhaft sei hier ein Richtungspfeil auf der Fahrbahn genannt, der nach links weist. Ist das Linksabbiegen aufgrund von zum Beispiel einer Baustelle allerdings nicht mehr möglich, können zusätzliche Markierungen dies signalisieren. So kann zum Beispiel ein Navigationsgerät geradeaus weisen und eine eventuell vom Scheinwerfer eingeblendete Richtungsanzeige ebenfalls nach vorne weisen. Diese projizierte Markierung wird jedoch von der auf der Fahrbahn aufgedruckten überlagert. Dies kann zur Verwirrung des Fahrers führen, der die auf der Straße fest aufgebrachte Markierung im Kopf mit der projizierten des Navigationsgerätes in Einklang bringen muss. Ferner offenbart Robert Tamburo et al. in Visual Communications and Image Processing, Band 8979 vom 7. März 2014 auf den Seiten 89790F-1 bis 89790F-4: "DMDs for smart headlights". Weiterhin offenbart die DE 10 2008 039 091 A1 ein Verfahren zur Aufbereitung von Kameradaten für eine variable Fahrlichtsteuerung eines Fahrzeuges. Darüber hinaus offenbart die CN 102 887 108 A einen Scheinwerfer für ein Kraftfahrzeug. Schließlich offenbart die US 2016/0371983 A1 ein Parkunterstützungssystem und ein Verfahren.

Der Erfindung liegt deshalb die Aufgabe zugrunde, das Projizieren von Markierungen zu verbessern.

Als Lösung werden mit der Erfindung ein Verfahren, eine Steuereinrichtung sowie ein Kraftfahrzeug gemäß den unabhängigen Ansprüchen vorgeschlagen.

Weitere vorteilhafte Ausgestaltungen ergeben sich anhand von Merkmalen der abhängigen Ansprüche.

Bezüglich eines gattungsgemäßen Verfahrens wird insbesondere vorgeschlagen, dass die Bildfolge mit einer Bildfolgefrequenz von größer als etwa 24 Hz, vorzugsweise größer als etwa 90 Hz, besonders bevorzugt von größer als etwa 100 Hz, bereitgestellt wird, wobei die Bildfolge wenigstens ein Referenzbild zum gleichmäßigen Beleuchten des Fahrwegs umfasst, die Fahrzeugkamera zum Erfassen des Fahrwegs bezüglich des Referenzbildes synchronisiert wird, aus den bereitgestellten Kameradaten bezüglich des Referenzbildes die wenigstens eine hinweisgebende Fahrwegausstattung sowie der hinweisgebenden Fahrwegausstattung zugeordnete Informationsdaten ermittelt werden, die zugeordneten Informationsdaten mit Daten einer Datenbank verglichen werden, und das Steuersignal abhängig von dem Vergleich ermittelt wird.

Bezüglich einer gattungsgemäßen Steuereinrichtung wird insbesondere vorgeschlagen, dass die Steuersignaleinheit ferner ausgebildet ist, die Bildfolge mit einer Bildfolgefrequenz von größer als etwa 24 Hz, vorzugsweise größer als etwa 90 Hz, besonders bevorzugt von größer als etwa 100 Hz, bereitzustellen, wobei die Bildfolge wenigstens ein Referenzbild zum gleichmäßigen Beleuchten des Fahrwegs umfasst, die Fahrzeugkamera zum Erfassen des Fahrwegs bezüglich des Referenzbildes zu synchronisieren und die Auswerteeinheit ausgebildet ist, aus den bereitgestellten Kameradaten bezüglich des Referenzbildes die wenigstens eine hinweisgebende Fahrwegausstattung sowie der hinweisgebenden Fahrwegausstattung zugeordnete Informationsdaten zu ermitteln, sowie die zugeordneten Informationsdaten mit Daten einer Datenbank zu vergleichen, und die Steuersignaleinheit ferner ausgebildet ist, das Steuersignal abhängig von dem Vergleich zu ermitteln.

Kraftfahrzeugseitig wird insbesondere vorgeschlagen, dass die Steuereinrichtung gemäß der Erfindung ausgebildet ist.

Die Erfindung basiert auf dem Gedanken, dass durch eine gleichmäßige Ausleuchtung der Fahrzeugumgebung auf einem vorgebbaren Beleuchtungsniveau die Möglichkeit geschaffen werden kann, mit der Fahrzeugkamera zuverlässig den Fahrweg, insbesondere hinweisgebende Fahrwegausstattungen des Fahrwegs, zu erfassen. Dabei wird die gleichmäßige Beleuchtung derart gewählt, dass sie weitere Verkehrsteilnehmer möglichst nicht behindert. Zu diesem Zweck sieht die Erfindung vor, dass mittels eines Referenzbildes, welches in die Bildfolge eingefügt wird oder ein bestehendes Bild der Bildfolge ersetzt, für einen kurzen Moment die gleichmäßige Beleuchtung bereitgestellt wird, wobei die Zeitdauer derart gewählt wird, dass insbesondere für das menschliche Auge keine signifikante Beeinträchtigung zu erwarten ist. Dies erreicht die Erfindung dadurch, dass die Bildfolgefrequenz entsprechend hoch gewählt wird, so dass eine Trägheit bei der Erfassung von Licht genutzt werden kann, um die Störung für die weiteren Verkehrsteilnehmer, insbesondere von Personen, beispielsweise Fahrern von anderen Kraftfahrzeugen oder dergleichen, zu vermeiden beziehungsweise zu reduzieren.

Um eine Erfassung der Fahrzeugumgebung während des aktiven Referenzbildes zu ermöglichen, wird die Fahrzeugkamera entsprechend synchronisiert. Zu diesem Zweck kann vorgesehen sein, dass die Fahrzeugkamera einen eigenen Sensor aufweist, der das Referenzbild ermitteln kann. Es kann aber auch vorgesehen sein, dass ein separates Kamerasteuersignal bereitgestellt wird, mittels welchem der Fahrzeugkamera die Information übermittelt wird, wann der Pixelscheinwerfer gemäß einem Referenzbild gesteuert wird. Schließlich besteht auch die Möglichkeit, wenn die Bildfolge nach Art einer Videosequenz bereitgestellt wird, die Erfassung auf die Videosequenz zu synchronisieren, wobei durch die Synchronisierung der Erfassung auf die Videosequenz automatisch auch eine Synchronisierung bezüglich des Referenzbildes erreicht werden kann.

Die Fahrzeugkamera kann beispielsweise eine Videokamera, eine Fotokamera und/oder dergleichen sein. Vorzugsweise hat die Fahrzeugkamera eine elektronischen, insbesondere eine digitale Aufnahmeeinheit, so dass entsprechend der erfassten Fahrzeugumgebung Kameradaten bereitgestellt werden können, die vorzugsweise digitale Daten sind.

Der Pixelscheinwerfer ist ein Scheinwerfer, der eine Mehrzahl von matrixartig angeordneten einzeln beziehungsweise individuell steuerbaren Pixeln aufweist, die in geeigneter Weise angesteuert werden können, um die Lichtabgabe des Pixelscheinwerfers gemäß dem jeweils aktuellen Bild der Bildfolge entsprechend des Steuersignals einstellen zu können. Ein Pixel des Pixelscheinwerfers stellt somit vorzugsweise eine im Wesentlichen punktförmige Lichtquelle dar. Die Lichtquelle kann beispielsweise durch eine Leuchtdiode, aber auch dem Grunde nach durch eine Gasentladungslampe, eine Glühlampe und/oder dergleichen gebildet sein. Diese Lichtquellen können zu einer Matrix zusammengefasst sein, die auch eine Scheinwerfersteuerung umfassen kann, mittels der die einzelnen Lichtquellen in entsprechender Weise gemäß dem Steuersignal steuerbar sind. Der Pixelscheinwerfer kann darüber hinaus auch eine Laserlichtquelle nach Art eines Laserscanners umfassen, der entsprechend gesteuert wird, damit eine Lichtverteilung gemäß dem Steuersignal bereitgestellt werden kann. Darüber hinaus kann der Pixelscheinwerfer natürlich weitere optisch aktive Elemente umfassen, die das von den einzelnen Lichtquellen emittierte Licht des Pixelscheinwerfers in gewünschter Weise zum Abgeben von Licht gemäß der Lichtverteilung anzupassen vermögen, beispielweise refraktorische Elemente wie Linsen, Prismen und/oder dergleichen, reflektierende Elemente wie beispielsweise Spiegel, insbesondere Mikrospiegel, DMD's (Digital Mirror Device), Kombinationen hiervon und/oder dergleichen.

Die Fahrzeugumgebung erfasst zumindest einen Teil eines Bereichs um das Fahrzeug herum, der beispielsweise durch die Sichtweite für den Fahrer begrenzt sein kann. Die Fahrzeugumgebung umfasst vorzugsweise den Fahrweg, der jedoch auch lediglich eine Fahrbahn sein kann, auf der das Kraftfahrzeug geführt wird, einen Gehweg, der neben einer Fahrbahn angeordnet ist, einen Fahrbahnrand, dem Fahrweg zugeordnete Verkehrszeichen, Kombinationen hiervon oder dergleichen umfassen. Auch Teilbereiche des Fahrzeugwegs können erfasst sein.

Mit dem Pixelscheinwerfer kann der Fahrweg zumindest teilweise beleuchtet werden, vorzugsweise in einem Bereich, in dem das Kraftfahrzeug während des bestimmungsgemäßen Fahrbetriebs hineinfährt. Der Pixelscheinwerfer dient somit zur zumindest teilweisen Beleuchtung des Fahrzeugwegs. Das Kraftfahrzeug braucht jedoch nicht nur einen einzigen Pixelscheinwerfer aufzuweisen, sondern es kann auch zwei oder noch mehr Pixelscheinwerfer aufweisen, die gemeinsam in geeigneter Weise angesteuert sein können, beispielsweise mittels des Steuersignals, welches dazu dienen kann, mehr als nur lediglich einen einzigen Pixelscheinwerfer zu steuern, oder auch mittels separater Steuersignale für jeden einzelnen von mehreren Pixelscheinwerfern. Der Pixelscheinwerfer ist vorzugsweise ein hochauflösender Scheinwerfer, der beispielsweise eine Million Pixel oder auch mehr umfassen kann.

Das Steuersignal selbst wird von einer Steuersignaleinheit bereitgestellt und ist vorzugsweise ein elektrisches Signal, welches insbesondere als digitales Signal ausgebildet ist. Das Steuersignal repräsentiert eine Bildfolge von Bildern nach Art einer Videosequenz, die dazu dienen, den Pixelscheinwerfer entsprechend zu steuern. Mit dem Pixelscheinwerfer wird ein jeweiliges Bild der Bildfolge, welches aktuell mittels des Steuersignals bereitgestellt wird, zum Steuern der Lichtquellen des Pixelscheinwerfers benutzt. Der Pixelscheinwerfer ist deshalb ausgebildet, nach Art eines Projektors, insbesondere eines Videoprojektors, Licht abzugeben.

Zumindest der beleuchtete Fahrzeugweg wird mittels der Fahrzeugkamera erfasst. Es kann je nach Ausgestaltung auch vorgesehen sein, dass die Fahrzeugkamera lediglich einen vorgebbaren Bereich des beleuchteten Fahrzeugwegs erfasst. Vorzugsweise kann vorgesehen sein, dass die Fahrzeugkamera lediglich einen Ausschnitt aus dem beleuchteten Bereich erfasst, der vor dem Kraftfahrzeug in Fahrtrichtung im bestimmungsgemäßen Fahrbetrieb angeordnet ist. Es kann aber auch vorgesehen sein, dass die Fahrzeugkamera den vollständigen Fahrzeugweg erfasst. Die Fahrzeugkamera kann als einzelne Baueinheit ausgebildet und in geeigneter Position am Kraftfahrzeug angeordnet sein. Die Fahrzeugkamera kann auch mehrteilig ausgebildet sein, so dass sie beispielsweise richtungsselektiv in unterschiedliche Richtungen den Fahrzeugweg erfassen kann und entsprechende Kameradaten bereitstellt.

Es ist ferner eine Auswerteeinheit vorgesehen, die die Kameradaten von der Fahrzeugkamera empfängt und zum Beispiel unter Berücksichtigung einer vorgegebenen Lichtverteilung auswertet. Dadurch kann das Steuersignal zum Steuern des Pixelscheinwerfers ermittelt und bereitgestellt werden.

Die vorgegebene Lichtverteilung ist eine Lichtverteilung, die beispielsweise als Soll-Lichtverteilung mittels des Pixelscheinwerfers bereitgestellt werden soll. Die vorgegebene Lichtverteilung kann durch eine übergeordnete Fahrzeugsteuerung, ein Steuerelement, welches mittels manueller Betätigung durch den Fahrer des Kraftfahrzeugs betätigbar ist, und/oder dergleichen bereitgestellt werden. Beispielsweise kann die vorgegebene Lichtverteilung ein Fernlicht, ein Abblendlicht und/oder dergleichen repräsentieren.

Mittels der Auswerteeinheit können die Kameradaten ausgewertet werden und zum Beispiel entgegenkommende Fahrzeuge oder andere Verkehrsteilnehmer erfasst werden. Werden andere Verkehrsteilnehmer erfasst, kann vorgesehen sein, dass folgende Bilder der Bildfolge derart geändert werden, dass ein Raumwinkel, in dem sich der andere Verkehrsteilnehmer befindet, ausgeblendet beziehungsweise entblendet wird.

Die Bildfolge umfasst wenigstens ein Referenzbild zur gleichmäßigen Beleuchtung der Fahrzeugumgebung. Das Referenzbild führt also dazu, dass die Lichtquellen des Pixelscheinwerfers derart angesteuert werden, dass sie Licht mit der etwa gleichen Lichtstärke emittieren. Es kann vorgesehen sein, dass die Lichtquellen zum Emittieren der maximalen Lichtstärke angesteuert werden. Die Fahrzeugkamera, die bezüglich des Referenzbildes synchronisiert ist und die Fahrzeugumgebung bezüglich des Referenzbildes synchronisiert erfasst, liefert entsprechende Kameradaten an die Auswerteeinheit. Die Auswerteeinheit kann dann anhand der Kameradaten Details ermitteln, die ansonsten bei den Bildern der Bildfolge nicht erkannt werden könnten, beispielsweise, weil eine entsprechende Beleuchtung in dem jeweiligen Bereich ungenügend ist, oder ein entsprechender Bereich aufgrund von einer Übersteuerung der Fahrzeugkamera aufgrund von zu großer Lichteinwirkung nicht erfasst werden kann. Auf diese Weise ist es möglich, zum Beispiel Fahrbahnbereiche zu erkennen, die mit Eis oder Wasser bedeckt sind. Ferner können auch weitere Fahrzeugdetails von zum Beispiel entgegenkommenden oder vorausfahrenden Kraftfahrzeugen ermittelt werden. Darüber hinaus besteht natürlich die Möglichkeit, das Steuersignal durch Anpassen von auf das Referenzbild folgenden Bildern unter Berücksichtigung der durch die Auswertung gewonnenen Erkenntnisse entsprechend anzupassen. So ist es möglich, beispielsweise einen Fahrbahnbereich, der mit Eis oder Wasser bedeckt ist, geringer zu beleuchten, so dass der Fahrer des Kraftfahrzeugs oder auch weitere Verkehrsteilnehmer möglichst nicht geblendet werden.

Anhand der Kameradaten bezüglich des Referenzbildes kann die Auswerteeinheit, beispielsweise mittels eines Algorithmus, die Kameradaten nach bekannten Objekten als hinweisgebende Fahrbahnausstattungen absuchen, beispielhaft seien hier Stopp-Zeichen, Richtungs-Pfeile, doppelte Fahrbahnmarkierungen (gelb/weiß), Warnhinweise und/oder Geschwindigkeitsangaben genannt.

Die Auswerteeinheit ermittelt für die ermittelten hinweisgebende Fahrbahnausstattungen Informationsdaten, die den jeweiligen hinweisgebenden Fahrbahnausstattungen zugeordnet sind, zum Beispiel die durch eine Fahrbahnmarkierung vorgegebene Fahrtrichtung oder dergleichen. Die bezüglich einer jeweiligen ermittelten hinweisgebenden Fahrbahnausstattungen festgestellten Informationsdaten werden nun mit den Daten einer Datenbank verglichen. Diese Datenbank enthält Daten aus dem Internet, GPS-Daten, Daten der Fahrzeugkamera, Auswertung von Verkehrsschildern, Verkehrsfunk, andere Sensordaten, Informationen zu der Position des Fahrzeugs und/oder dergleichen. Abhängig von dem Vergleich wird dann das Steuersignal mittels der Steuersignaleinheit ermittelt, die mit der Auswerteeinheit kommunikationstechnisch gekoppelt ist.

Bei Übereinstimmung kann eine Aktion unterlassen werden oder die hinweisgebende Fahrbahnausstattung hervorgehoben werden. Bei fehlender Übereinstimmung kann durch Anpassen der Bilder der Bildfolge in bestimmten Bereichen die hinweisgebende Fahrbahnausstattung, beispielsweise die Markierung auf der Straße, weniger visuell sichtbar gemacht werden. Es ist auch möglich die hinweisgebende Fahrbahnausstattung aktiv mit anderen projizierten Markierungen zu "überblenden" oder zu durchkreuzen.

Die Steuereinrichtung passt somit statische hinweisgebende Fahrbahnausstattungen des Fahrwegs an die dynamischen Informationen der Sensoren und Daten an und entfernt somit den Informationsunterschied zwischen statischen hinweisgebenden Fahrbahnausstattungen und der tatsächlich vorhandenen Umgebung. Dabei erweist es sich als vorteilhaft, dass das Referenzbild lediglich für eine sehr kurze Zeitspanne aktiviert ist, so dass der Fahrer des Kraftfahrzeugs sowie auch die weiteren Verkehrsteilnehmer im Wesentlichen nicht beeinträchtigt werden.

Die Erfindung erweist sich insbesondere für einen nachträglichen Einbau in das Kraftfahrzeug beziehungsweise den Pixelscheinwerfer als geeignet. Da gattungsgemäße Pixelscheinwerfer bereits mit einem Steuersignal nach Art einer Videosequenz angesteuert werden können, kann die Erfindung auf einfache Weise realisiert werden, ohne dass es erforderlich ist, konstruktiv in bestehende Konzepte eingreifen zu müssen. Da ein einzelnes Referenzbild vom menschlichen Auge mit den Werten von den nächsten 23 folgenden Bildern gemittelt wird, fällt den weiteren Verkehrsteilnehmern im Wesentlichen keinerlei Blendung auf. Dadurch ermöglicht es die Erfindung, dass die Fahrzeugkamera ein detailliertes Bild des Fahrwegs, insbesondere von hinweisgebenden Fahrbahnausstattungen, aufnehmen kann, ohne die weiteren Fahrzeugteilnehmer zu stören. Zugleich ermöglicht es die Erfindung, zuverlässig vorhandene hinweisgebende Fahrwegausstattungen zu erkennen. Insbesondere kann die Beleuchtung der Fahrbahn aktiv so gesteuert werden, dass die Fahrzeugkamera möglichst viele Objekte erkennen und klassifizieren kann.

Ein Vorteil der Erfindung liegt in der Tatsache, dass bestehende Bauteile des Fahrzeuges weiterverwendet werden können. Die hochauflösenden Scheinwerfer beziehungsweise Pixelscheinwerfer kommender Fahrzeuge, die zur besseren Ausleuchtung der Straße und zur Interaktion mit Verkehrsteilnehmern eingeführt werden, setzen die gleichen Sensoren wie die hier vorgestellte Lösung voraus. Da diese Module mit einer Videosequenz angesteuert werden, stellt die Einbettung einzelner Frames beziehungsweise Bilder mit Kontrollmustern keine Schwierigkeit dar. Auch das wiederholende invertieren definierter Bereiche ist mit dieser Technik möglich.

Die Führung des Fahrers kann verbessert werden, weil die Informationen die über die Fahrbahn visuell an den Fahrer übertragen werden, wieder mit den Informationen übereinstimmen, die der Fahrer aus anderen Quellen übermittelt bekommt. Es werden Dissonanzen vermieden, die den Fahrer ablenken beziehungsweise verwirren können.

Die Daten, die zum Beispiel über die bestehende Fahrbahnbeschriftung gesammelt werden, können als Datenbasis für Verkehrsdatenbanken genutzt werden.

Ferner umfasst die Bildfolge wiederholt Referenzbilder, wobei aufeinanderfolgende Referenzbilder mindestens etwa 0,5 Sekunden, vorzugsweise mindestens etwa 0,8 Sekunden, voneinander zeitlich beabstandet sind. Es hat sich nämlich gezeigt, dass bei einem derartigen Abstand der Referenzbilder zueinander eine Beeinträchtigung des Fahrers und/oder der weiteren Verkehrsteilnehmer weitgehend vermieden werden kann, wobei zugleich eine zuverlässige Funktionalität gemäß der Erfindung gewährleistet werden kann. Alternativ oder ergänzend kann auch vorgesehen sein, dass der Abstand der Referenzbilder zeitlich zueinander von einer Fahrzeuggeschwindigkeit des Kraftfahrzeugs abhängig ist. So kann vorgesehen sein, dass die Referenzbilder bei einer hohen Fahrzeuggeschwindigkeit mit einem geringen Abstand zeitlich zueinander folgen, wohingegen bei einer niedrigen Fahrzeuggeschwindigkeit, beispielsweise beim Rangieren oder dergleichen, der zeitliche Abstand zueinander vergrößert sein kann. Darüber hinaus können natürlich auch weitere Fahrzeugparameter berücksichtigt werden, um den zeitlichen Abstand der aufeinanderfolgenden Referenzbilder einstellen zu können. Die Referenzbilder brauchen nicht zeitlich äquidistant aufeinander zu folgen, sondern es kann darüber hinaus vorgesehen sein, dass der zeitliche Abstand der Referenzbilder zueinander variiert.

Es wird ferner vorgeschlagen, dass, wenn die Informationsdaten von den Daten der Datenbank abweichen, die Bilder der Bildfolge derart ermittelt werden, dass eine den Daten der Datenbank entsprechende hinweisgebende Fahrwegausstattung mittels des Pixelscheinwerfers visuell erfassbar projiziert wird. Dadurch kann die visuelle Führung des Kraftfahrzeugs zuverlässiger erfolgen.

Weiterhin wird vorgeschlagen, dass die ermittelte hinweisgebende Fahrwegausstattung von der projizierten hinweisgebenden Fahrwegausstattung zumindest teilweise visuell erfassbar überlagert wird. Dadurch kann erreicht werden, dass ermittelte hinweisgebende Fahrwegausstattung visuell in den Hintergrund tritt und weniger wahrgenommen wird. Ferner kann die projizierte hinweisgebende Fahrwegausstattung in den Vordergrund treten und so zu einer zuverlässigeren Erfassung der tatsächlich gewünschten Verkehrsführung insbesondere für den Fahrer des Kraftfahrzeugs aber auch gegebenenfalls einer autonomen Fahrzeugsteuerung führen.

Vorzugsweise wird die ermittelte hinweisgebende Fahrwegausstattung in die projizierte hinweisgebende Fahrwegausstattung zumindest teilweise eingebettet. Die ermittelte hinweisgebende Fahrwegausstattung kann dadurch Bestandteil der projizierten hinweisgebenden Fahrwegausstattung werden, wodurch die visuelle Erfassbarkeit weiter verbessert werden kann.

Darüber hinaus wird vorgeschlagen, dass, wenn die Informationsdaten von den Daten der Datenbank abweichen, die Bilder der Bildfolge derart ermittelt werden, dass die ermittelte hinweisgebende Fahrwegausstattung höchstens teilweise beleuchtet wird. Vorzugsweise wird sie lediglich in Bereichen beleuchtet, in denen auch eine Projektion gemäß der projizierten hinweisgebenden Fahrwegausstattung erfolgt. Bestandteile der ermittelten hinweisgebenden Fahrwegausstattung, die außerhalb der projizierten hinweisgebenden Fahrwegausstattung sind, können zum Beispiel nicht oder zumindest reduziert beleuchtet werden. Dadurch treten diese Bestandteile der ermittelten hinweisgebenden Fahrwegausstattung visuell in den Hintergrund, wodurch die visuelle Erfassbarkeit ebenfalls weiter verbessert werden kann.

Es wird weiterhin vorgeschlagen, dass anhand der Kameradaten wenigstens ein über- oder unterbelichteter Bereich des beleuchteten Fahrwegs ermittelt wird. Zu diesem Zweck werden insbesondere die Kameradaten genutzt, die während des Referenzbildes mittels der Fahrzeugkamera erfasst werden.

Es wird ferner vorgeschlagen, dass die auf das Referenzbild folgenden Bilder der Bildfolge abhängig von dem wenigstens einen über- oder unterbelichteten Bereich ermittelt werden. In dieser Ausgestaltung werden also die auf das Referenzbild folgenden Bilder der Bildfolge aufgrund der Auswertung anhand der Kameradaten während des Referenzbildes entsprechend angepasst, um die Beleuchtung den Fahrweg, insbesondere die Fahrbahn, zu verbessern. Dadurch ist es möglich, spezifische Bereiche des Fahrwegs, die sehr hell leuchten und den Fahrer beziehungsweise die Fahrzeugkamera gegebenenfalls blenden, oder auch Bereiche, in denen aufgrund mangelnder Beleuchtung die Sichtverhältnisse ungünstig sind, durch Anpassen der Bilder und infolgedessen auch Anpassen der Lichtabgabe des Pixelscheinwerfers verbessert auszuleuchten. Natürlich braucht die Erfindung nicht auf einen einzigen Bereich beschränkt zu sein, sondern es können zugleich auch mehrere über- oder unterbelichtete Bereiche ermittelt werden.

Es wird ferner vorgeschlagen, dass das Referenzbild mittels eines den Pixelscheinwerfer steuernden Referenzsteuersignals bereitgestellt wird. In dieser Ausgestaltung ist ein separates Steuersignal, nämlich das Referenzsteuersignal, zum Bereitstellen des Referenzbildes vorgesehen. Es braucht daher nicht in eine bestehende Bildfolge eingegriffen zu werden. Zu diesem Zweck kann vorgesehen sein, dass der Pixelscheinwerfer einen separaten Eingangsanschluss aufweist, an dem das Referenzsteuersignal zugeführt werden kann. Es kann aber auch vorgesehen sein, dass das Referenzsteuersignal der Steuersignaleinheit zugeführt wird, die dann in die Bildfolge ein entsprechendes Referenzbild einfügt oder ein vorhandenes Bild durch das Referenzbild ersetzt. In vergleichbarer Weise kann diese Funktion natürlich auch beim Pixelscheinwerfer selbst vorgesehen sein.

Vorzugsweise wird das Referenzbild mittels des Pixelscheinwerfers für eine Zeitdauer von weniger als etwa 0,033 Sekunden, vorzugsweise von weniger als etwa 0,01 Sekunden, bereitgestellt. Bei einer derartigen Zeitdauer kann einerseits mittels der Fahrzeugkamera der Fahrweg bezüglich des Referenzbildes zuverlässig erfasst werden und andererseits eine ungünstige Wirkung auf weitere Verkehrsteilnehmer oder auch auf den Fahrer des Kraftfahrzeugs weitgehend vermieden werden.

Vorzugsweise beleuchtet der Pixelscheinwerfer eine Fahrbahn als Fahrweg. Der Pixelscheinwerfer ist deshalb beispielsweise ein Frontscheinwerfer des Kraftfahrzeugs. Er kann aber auch ein Rückfahrscheinwerfer oder ein Zusatzscheinwerfer oder dergleichen sein.

Ferner wird vorgeschlagen, dass mittels der Fahrzeugkamera Sichtverhältnisse ermittelt werden und das Verfahren abhängig von den ermittelten Sichtverhältnissen durchgeführt wird. Auf diese Weise ist es möglich, die Verfahrensführung optimiert einzusetzen, nämlich insbesondere dann, wenn ungünstige Lichtverhältnisse vorliegen und die Sicht, insbesondere in Bezug für den Fahrer des Kraftfahrzeugs oder auch weitere Verkehrsteilnehmer behindert ist. Beispielsweise kann vorgesehen sein, dass mit der Fahrzeugkamera eine Umgebungshelligkeit oder auch Niederschläge erfasst werden, woraufhin dann die entsprechende Verfahrensführung aktiviert wird. Entsprechend kann die Verfahrensführung auch wieder deaktiviert werden, wenn mittels der Fahrzeugkamera eine Verbesserung der Sichtverhältnisse ermittelt worden ist oder die entsprechenden Voraussetzungen, die die Verfahrensführung gemäß der Erfindung aktiviert haben, entfallen sind.

Die für das erfindungsgemäße Verfahren angegebenen Wirkungen und Vorteile gelten gleichermaßen für die erfindungsgemäße Steuereinrichtung sowie das mit der erfindungsgemäßen Steuereinrichtung ausgerüstete Kraftfahrzeug und umgekehrt. Insbesondere können deshalb Verfahrensmerkmalen auch entsprechende Vorrichtungsmerkmale zugeordnet werden und als solche formuliert sein und umgekehrt.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Im Folgenden sind Ausführungsbeispiele der Erfindung beschrieben. Hierzu zeigt:
- Fig. 1: schematisch eine erste Ausgestaltung eines Pixelscheinwerfers;
- Fig. 2: schematisch eine zweite Ausgestaltung eines Pixelscheinwerfers;
- Fig. 3: eine schematische Darstellung einer Lichtabgabe bei Ansteuerung des Pixelscheinwerfers nach Fig. 1 oder 2 mit einem Referenzbild;
- Fig. 4: eine schematische Darstellung einer Lichtabgabe bei Ansteuerung des Pixelscheinwerfers nach Fig. 1 oder 2 mit einem Bild einer Bildfolge;
- Fig. 5: eine schematische Darstellung eines Ausschnitts einer Bildfolge zum Ansteuern des Pixelscheinwerfers nach Fig. 1 oder 2,
- Fig. 6: schematische Darstellungen für eine erste Ausgestaltung gemäß der Erfindung,
- Fig. 7: schematische Darstellungen für eine zweite Ausgestaltung gemäß der Erfindung,
- Fig. 8: schematische Darstellungen für eine dritte Ausgestaltung gemäß der Erfindung, und
- Fig. 9: schematische Darstellungen für eine vierte Ausgestaltung gemäß der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

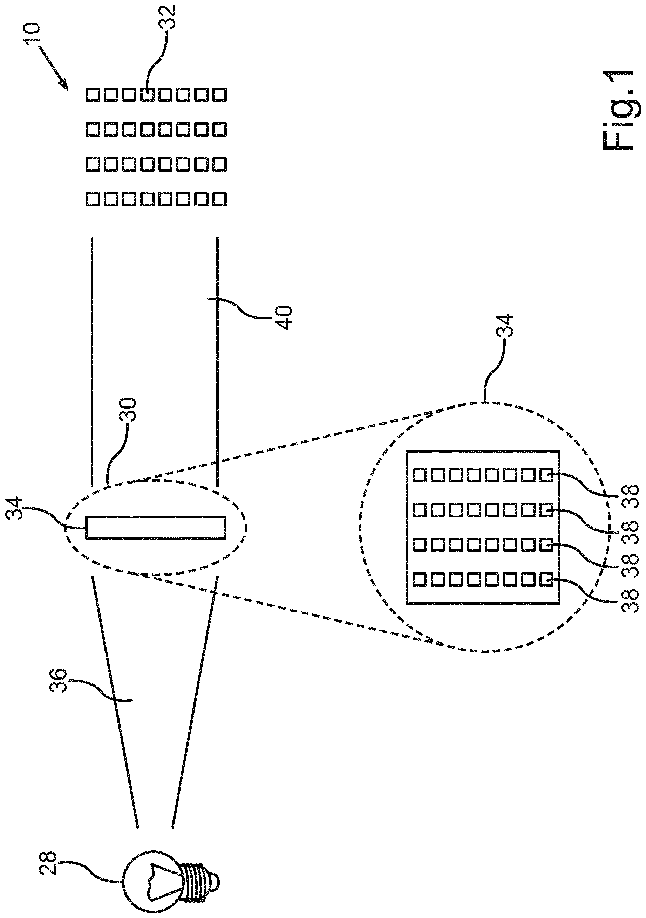

Fig. 1 zeigt in einer schematischen Darstellung eine erste Ausgestaltung für einen Pixelscheinwerfer 10, mittels dem das Verfahren der Erfindung ausgeführt werden kann. Der Pixelscheinwerfer 10 umfasst eine Lichtquelle 28, die vorliegend zum Beispiel durch eine Gasentladungslampe gebildet sein kann. Alternativ können hier natürlich auch eine Laserlichtquelle, eine entsprechend leuchtstarke Leuchtdiode, eine Glühlampe oder dergleichen vorgesehen sein. Die Lichtquelle 28 emittiert Licht 36, welches einer Matrix 34 zugeführt wird. Die Matrix 34 besitzt einzelne Elemente 38, welche individuell auf transparent oder intransparent geschaltet werden können. Dadurch werden die einzelnen Pixel des Pixelscheinwerfers 10 bereitgestellt. In einer unteren vergrößerten Darstellung ist eine schematische Draufsicht auf die Matrix 34 dargestellt, in denen die einzelnen Elemente 38 erkennbar sind. Abhängig von einer jeweiligen Ansteuerung des Pixelscheinwerfers 10 mittels eines Steuersignals werden die entsprechenden Elemente 38 auf transparent beziehungsweise auf intransparent geschaltet, so dass ein entsprechendes Lichtmuster beziehungsweise eine Lichtverteilung bereitgestellt wird, gemäß der Licht 40 abgegeben wird. Mit 32 ist eine Lichtabgabe des Lichts 40 dargestellt, die bereitgestellt wird, wenn sämtliche Elemente 38 der Matrix 34 auf transparent geschaltet sind.

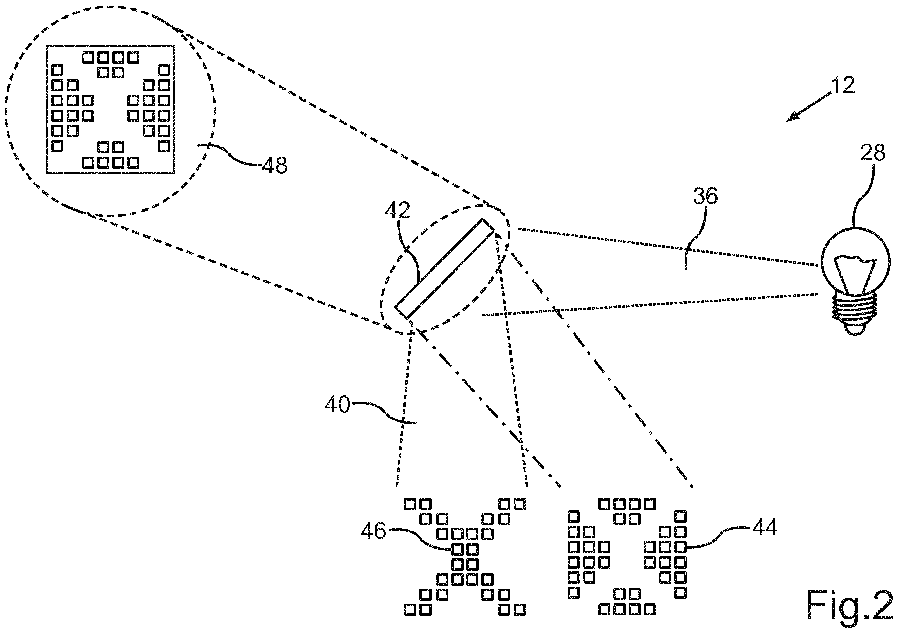

Fig. 2 zeigt eine zweite Ausgestaltung für einen Pixelscheinwerfer 12, mittels dem die Erfindung realisiert werden kann. Der Pixelscheinwerfer 12 weist wie der Pixelscheinwerfer 10 gemäß Fig. 1 die Lichtquelle 28 auf, die Licht 36 emittiert. Das Licht 36 wird hier einer Spiegelmatrix 42 zugeführt, die in Einzelteile untergliedert ist, die individuell angesteuert werden können. Je nach Ansteuerung wird das Licht 36 in eine der individuellen Ansteuerung entsprechende Richtung abgelenkt. Mittels der Spiegelmatrix 42 werden somit die einzelnen Pixel des Pixelscheinwerfers 12 bereitgestellt. Mit 48 ist eine aktuelle Einstellung der Spiegelmatrix 42 vergrößert dargestellt. Diese Einstellung der Spiegelmatrix 42 führt dazu, dass von der Spiegelmatrix 42 das Licht 36 teilweise reflektiert wird und als Licht 40 abgegeben wird, welches eine Lichtverteilung gemäß der Darstellung 48 aufweist. Mittels der übrigen Elemente der Spiegelmatrix 42 wird das Licht 36 in eine Lichtfalle 44 abgelenkt. Der Pixelscheinwerfer 12 gibt somit eine Lichtverteilung gemäß dem abgegebenen Licht 40 ab.

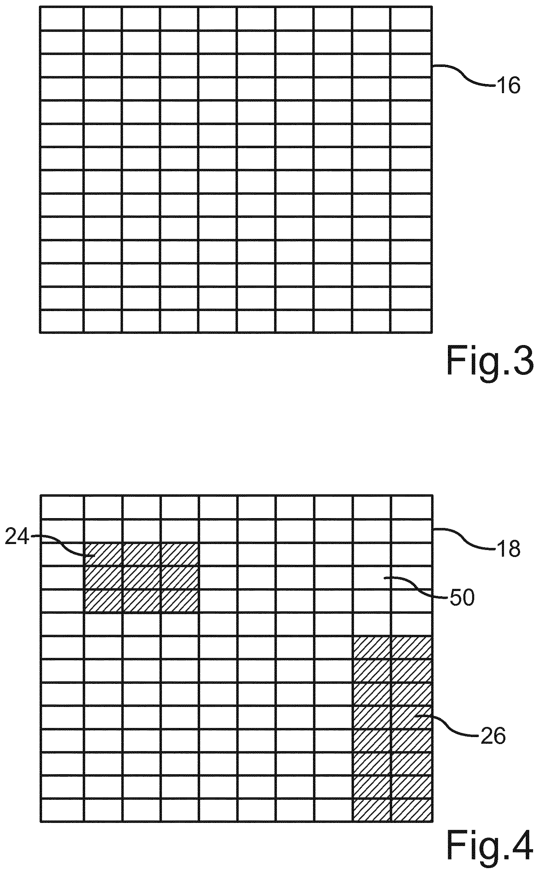

Die Fig. 3 bis 5 zeigen im Folgenden ein Verfahren zum Beleuchten einer Fahrzeugumgebung eines Kraftfahrzeugs, bei dem der Pixelscheinwerfer 10, 12 des Kraftfahrzeugs, welches in den Fign. nicht dargestellt ist, abhängig von einem eine Bildfolge 14 repräsentierenden Steuersignal Licht 40 abgibt, um die Fahrzeugumgebung zumindest teilweise zu beleuchten.

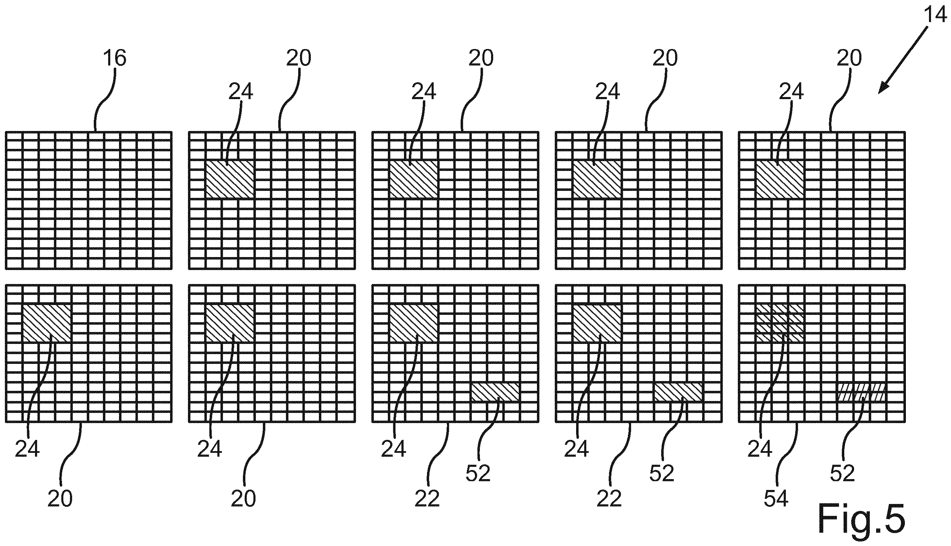

Ein jeweiliges einzelnes Bild 20, 22 (Fig. 5) einer Bildfolge 14 entspricht einer jeweiligen aktuell durch den Pixelscheinwerfer 10, 12 bereitzustellenden Lichtverteilung. Die beleuchtete Fahrzeugumgebung wird mittels einer nicht dargestellten Fahrzeugkamera erfasst, die entsprechende Kameradaten 18 (Fig. 4) bereitstellt. In Fig. 4 ist eine Auswertung der Kameradaten 18 dargestellt, wonach die Kameradaten 18 einen Bereich 24 erfassen, bei dem eine Beleuchtung zu groß ist, so dass eine Blendung auftreten kann. Ferner ergibt sich aus den Kameradaten 18, dass ein Bereich 26 ermittelt wurde, bei dem eine Beleuchtung unzureichend ist. So können Kontraste in den Bereichen 24, 26 nicht hinreichend erkannt werden. In einem übrigen Bereich 50 ist eine normale Ausleuchtung in einem zulässigen Bereich erfasst worden.

Die Kameradaten 18 werden mittels einer ebenfalls nicht dargestellten Auswerteeinheit unter Berücksichtigung einer vorgegebenen Lichtverteilung, hier ein Fernlicht, ausgewertet, um das Steuersignal zum Steuern des Pixelscheinwerfers 10, 12 zu ermitteln und bereitzustellen.

Die Bildfolge 14 (Fig. 5) wird mit einer Bildfolgefrequenz von vorliegend etwa 100 Hz bereitgestellt. Die Bildfolge 14 umfasst ein Referenzbild 16 (Fig. 3), welches zum gleichmäßigen Beleuchten der Fahrzeugumgebung dient. Vorliegend ist vorgesehen, dass sämtliche Pixel des Pixelscheinwerfers 10, 12 maximale Helligkeit abgeben.

Die Fahrzeugkamera erfasst die Fahrzeugumgebung bezüglich des Referenzbildes 16, indem sie entsprechend synchronisiert wird. Das Ansteuern des Pixelscheinwerfers 10, 12 mittels des Referenzbildes 16 führt dazu, dass die Fahrzeugkamera während des Darstellens des Referenzbildes 16 mittels des Pixelscheinwerfers 10, 12 die Kameradaten 18 erfasst. Die Kameradaten 18 entsprechen somit einer Aufnahme während das Referenzbild 16 mittels des Pixelscheinwerfers 10, 12 dargestellt wird. Die Kameradaten 18 sind beispielsweise anhand von Fig. 4 dargestellt.

Das Steuersignal wird nun mittels der Auswerteeinheit abhängig von den bezüglich des Referenzbilds 16 erfassten Kameradaten 18 ermittelt.

Fig. 5 zeigt eine Videosequenz beziehungsweise die Bildfolge 14, die das Steuersignal repräsentiert, um den Pixelscheinwerfer 10, 12 ansteuern zu können. Die Reihenfolge der einzelnen Bilder ist zeitlich von links nach rechts und von oben nach unten.

Ein erstes Bild ist durch das Referenzbild 16 gebildet. Während dieses Referenzbild 16 zur Steuerung des Pixelscheinwerfers 10, 12 dient, erfasst die Fahrzeugkamera die Fahrzeugumgebung und liefert Kameradaten 18 (Fig. 4). Aufgrund der Kameradaten 18 werden die folgenden Bilder 20 ermittelt, bei denen der Bereich 24 hinsichtlich der Lichtstärke reduziert ist, um ein entgegenkommendes Objekt zu entblenden beziehungsweise auszublenden. Die sechs Bilder 20, die unmittelbar aufeinanderfolgen, steuern somit für die weiteren sechs Zyklen beziehungsweise Frames den Pixelscheinwerfer 10, 12 hinsichtlich der Lichtabgabe.

Durch weitere Auswertung der Kameradaten 18, insbesondere unter Berücksichtigung des Bereichs 26 (Fig. 4) werden Bereiche 52 ebenfalls ausgeblendet beziehungsweise entblendet, in denen eine verminderte Beleuchtung gewünscht ist, um ein Blenden aufgrund von Eis beziehungsweise Wasser zu reduzieren. Dies wird mit den auf die Bilder 20 folgenden Bildern 22 erreicht. Ein darauffolgendes Bild 54 zeigt, dass die Ausblendung in den Bereichen 24, 52 reduziert ist. In diesen Bereichen werden die Pixel somit wieder zur teilweisen Lichtabgabe angesteuert.

Der in Fig. 5 dargestellte Ausschnitt der Bildfolge 14 zeigt die prinzipielle Verfahrensführung. In der vorliegenden Ausgestaltung ist vorgesehen, dass pro Sekunde 100 Bilder 16, 20, 22, 52 aufeinanderfolgend als Steuersignal bereitgestellt werden. Je nach Bedarf können ergänzende Referenzbilder 16 in der Bildfolge 14 vorgesehen sein. In der vorliegenden Ausgestaltung ist vorgesehen, dass jedes dreißigste Bild ein Referenzbild 16 ist. Natürlich kann die Bildrate oder der zeitliche Abstand der Referenzbilder 16 auch bedarfsgerecht variiert sein, um die Verfahrensführung in geeigneter Weise an aktuelle Anforderungen anpassen zu können.

Die im Folgenden beschriebenen beispielhaften Ausgestaltungen zur Steuerung eines hochauflösenden Scheinwerfers wie dem Pixelscheinwerfer 10, 12, erlauben die Erzeugung von Mustern in sehr kurzen Intervallen. Da das menschliche Auge die Helligkeit einer beobachteten Fläche über die Zeit mittelt, ist es möglich einzelne Bilder wie das Referenzbild 16 einzubringen, die vom Beobachter nicht erkannt werden.

In der vorliegenden Idee wird die Bildwiederholfrequenz so gewählt, dass es möglich ist, mittels des Referenzbildes 16 ein Vollbild anzuzeigen, ohne dass dies dem Fahrer auffällt. Es ist somit möglich, Objekte zum Beispiel mittels MatrixBeam-Technik auszublenden und dennoch für einen sehr kurzen Zeitraum die komplette Fahrbahn des Fahrwegs auszuleuchten.

Die Fahrzeugkamera ist so mit dem Pixelscheinwerfer 10, 12 synchronisiert, dass sie Kameradaten 18 bei voller Beleuchtung der Fahrbahn entsprechend des Referenzbildes 16 aufnehmen und dieses gesondert weitergeben kann.

Die Auswerteeinheit durchsucht die Kameradaten des vollbeleuchteten Bilds nach bekannten Symbolen als hinweisgebenden Fahrwegausstattungen wie zum Beispiel Pfeile, Markierungen, Warnungen, und/oder dergleichen und weist ihnen definierte Aussagen als Informationsdaten zu, beispielsweise linksabbiegen, Frost, abweichende Fahrspur und/oder dergleichen. Diese Aussagen werden daraufhin mit einer Datenbank abgeglichen und auf Widersprüche hin untersucht.

Beispielhaft seien hier genannt:
In einem Tunnel ist ein Abbiegepfeil nach rechts die Fahrbahn aufgemalt, durch den Verkehrsfunk und Schilder ist jedoch bekannt, dass die Abfahrt gesperrt ist.

Durch Ausbesserungen der Straße fehlen Teile der Markierung, allerdings ist durch GPS und vorhergehende Markierungen bekannt, wo die zum Beispiel Mittelstreifen liegen sollen.

Auf der Fahrbahn ist eine Richtungsangabe aufgebracht zum Beispiel "Zentrum" durch eine Umleitung führt diese Fahrbahn jedoch nicht mehr ins Zentrum sondern in die Außenbezirke.

Durch Umbauarbeiten sind gelbe Markierungen aufgebracht und die weißen Markierungen sind ungültig.

Die Informationen auf der Fahrbahn sind korrekt und sollen deutlicher sichtbar gemacht werden.

Die Auswerteeinheit reagiert nun dynamisch auf die Fahrbahnsymbole. Hierzu kann sie eine programmgesteuerte Rechnereinheit umfassen. Das Programm kann einen geeigneten Algorithmus realisieren. Da die Geschwindigkeit des Kraftfahrzeugs bekannt ist und die Position der Symbole beziehungsweise Markierungen in hoher Frequenz durch die Bilder der Bildfolge 14 mit der Fahrzeugkamera ausgewertet werden kann, ist es möglich die Bewegung und Umrisse der Symbole beziehungsweise Markierungen innerhalb der Fahrersicht nachzuverfolgen. Unliebsame und falsche Informationen können in den verbleibenden beziehungsweise folgenden Bildern nun ausgeblendet, verändert oder heruntergeregelt werden. Nützliche Informationen können verdeutlicht werden.

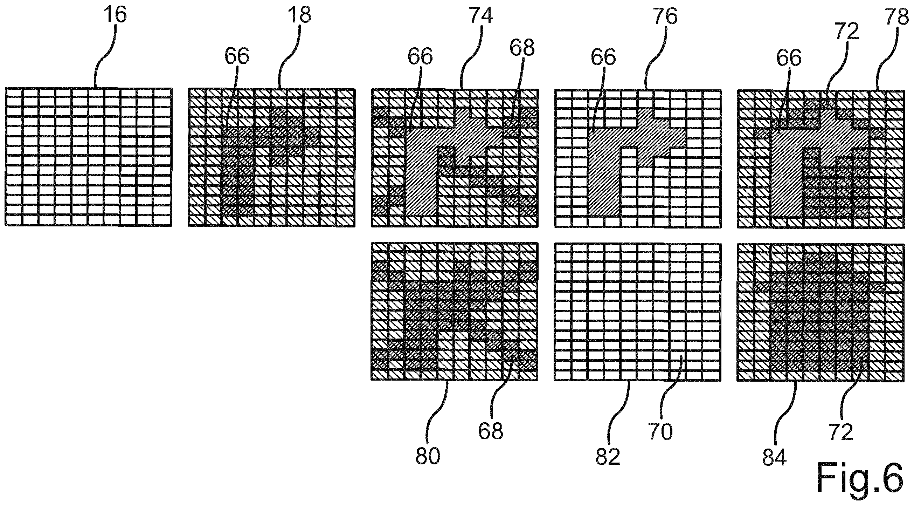

Fig. 6 zeigt Beispiele für den Einsatz der Erfindung anhand eines auf einer Fahrbahn eines Fahrwegs angebrachten Richtungspfeils 66. Mittels des Verfahrens der Erfindung zum Steuern des Pixelscheinwerfers 10, 12 eines auf einem Fahrweg angeordneten Kraftfahrzeugs, bei dem -der Pixelscheinwerfer 10, 12 abhängig von einem eine Bildfolge 14 repräsentierenden Steuersignal Licht 40 abgibt, um den Fahrweg zumindest teilweise zu beleuchten. Ein jeweiliges einzelnes Bild der Bildfolge 14 einer jeweiligen aktuell durch den Pixelscheinwerfer 10, 12 bereitzustellenden Lichtverteilung entspricht. Der beleuchtete Fahrweg wird mittels einer Fahrzeugkamera erfasst, die entsprechende Kameradaten 18 bereitstellt. Die Kameradaten 18 werden ausgewertet, um eine hinweisgebende Fahrwegausstattung, hier der Richtungspfeil 66, zu ermitteln und das Steuersignal zum Steuern des Pixelscheinwerfers 10, 12 abhängig von der ermittelten hinweisgebenden Fahrwegausstattung bereitzustellen.

Erfindungsgemäß wird die Bildfolge 14 mit einer Bildfolgefrequenz von größer als 100 Hz, bereitgestellt. Die Bildfolge 14 umfasst ein Referenzbild 16 zum gleichmäßigen Beleuchten des Fahrwegs. Die Fahrzeugkamera wird zum Erfassen des Fahrwegs bezüglich des Referenzbildes 16 synchronisiert. Aus den bereitgestellten Kameradaten 18 werden bezüglich des Referenzbildes 16 die hinweisgebende Fahrwegausstattung sowie der hinweisgebenden Fahrwegausstattung zugeordnete Informationsdaten ermittelt. Die zugeordneten Informationsdaten werden mit Daten einer Datenbank verglichen. Das Steuersignal wird abhängig von dem Vergleich ermittelt.

In Fig. 6 ist ganz links das Referenzbild 16 dargestellt. Rechts daneben sind die bezüglich des Referenzbilds 16 mittels der Fahrzeugkamera erfassten Kameradaten 18 dargestellt.

Die Darstellungen 74 und 80 beziehen sich auf ein Durchkreuzen des ermittelten Pfeils 66 mittels einer durch den Pixelscheinwerfer gemäß eines Bildes der Bildfolge 14 bereitgestellten Projektion als Lichtabgabe. Mit 74 ist das Bild dargestellt, welches mittels der Steuersignaleinheit unter Berücksichtigung der Auswertung der Kameradaten 18 ermittelt wurde. Mit 80 ist die entsprechend beleuchtete Fahrbahn dargestellt. Zu erkennen ist, dass der Pfeil 66 nicht beleuchtet wird. Dagegen wird ein Kreuz 68 hell projiziert. Der weitere Bereich des Bildes 74 ist gemäß einer normalen vorgegebenen Lichtverteilung ausgeleuchtet. Die Darstellung 80 zeigt die Projektion auf der Fahrbahn. Das Kreuz 68 ist visuell gut zu erkennen. Der Pfeil 66 dagegen ist kaum zu erkennen.

Mit zwei weiteren Darstellungen 76, 82 beziehen sich darauf, den Pfeil 66 auszublenden. Zu diesem Zweck wird aus den Kameradaten 18 das Bild 76 ermittelt, dass mittels des Pixelscheinwerfers 10, 12 dargestellt wird. Mit 82 ist die entsprechend beleuchtete Fahrbahn dargestellt. Zu erkennen ist lediglich eine im Wesentlichen gleichmäßige Beleuchtung der Fahrbahn, was mit dem Bezugszeichen 70 bezeichnet ist. Der Pfeil 66 ist nicht mehr visuell erkennbar.

Zwei weitere Darstellungen 78, 84 beziehen sich darauf, den Pfeil 66 in die Projektion einzubeziehen. Der Pfeil 66 soll durch einen Pfeil 72 überlagert werden, der anhand von Daten einer Datenbank als tatsächliche Verkehrsführung ermittelt wurde. Mit 78 ist das entsprechende Bild bezeichnet. 84 stellt die entsprechend beleuchtete Fahrbahn dar. Zu erkennen ist lediglich der Pfeil 72, der den Pfeil 66 vollständig umfasst. Es ist somit nur noch der Pfeil 72 visuell sichtbar.

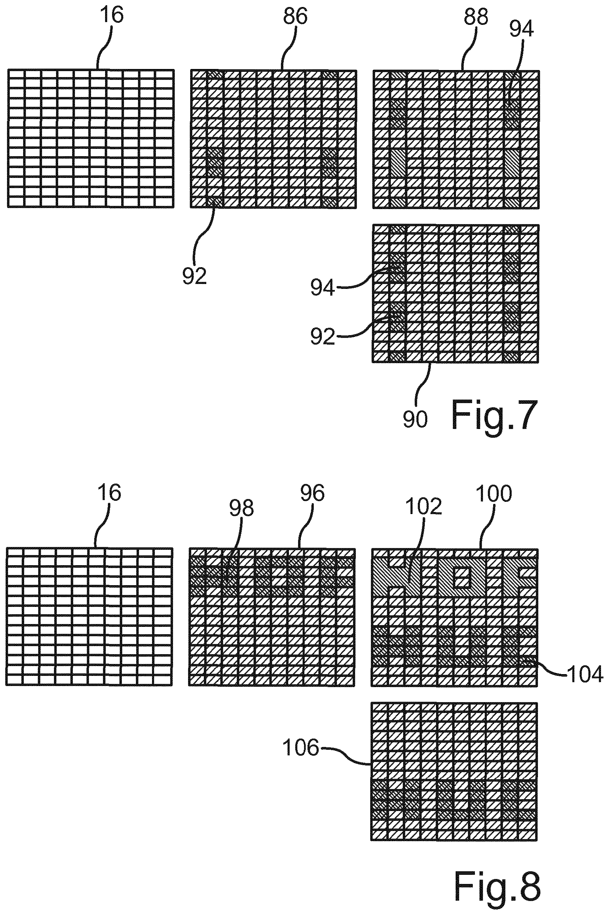

Fig. 7 zeigt ein weiteres Beispiel für den Einsatz der Erfindung, und zwar die visuelle Projektion von fehlenden Seitenstreifen. Wie auch im ersten Fall zur Fig. 6 erlaubt das Referenzbild 16 die Erfassung von Kameradaten 86 der Fahrbahn. Bei der Auswertung zeigt sich, dass Seitenstreifen 92 dargestellt sind, wobei jedoch Teile der Seitenstreifen fehlen. Mittels Auswertend er Kameradaten 86 wird ein Bild 88 ermittelt, welches zum Steuern des Pixelscheinwerfers 10, 12 dient. Die bereits erkannten Markierungen 92 sind hell genug und müssen nicht weiter beleuchtet werden, wohingegen der Rest der Fahrbahn mit durchschnittlicher Lichtstärke beleuchtet wird. Bereiche mit den fehlenden Seitenstreifen 94 werden maximal bestrahlt. Auf der Fahrbahn ergibt sich ein durchgängiges Muster der Seitenstreifen, wie es mit 90 dargestellt ist.

Fig. 8 zeigt ein weiteres Beispiel für den Einsatz der Erfindung, und zwar das Ersetzen einer Fahrbahnbeschriftung zur Verkehrsleitung. Mit 16 ist wieder das Referenzbild dargestellt. Die zugeordneten Kameradaten sind mit 96 bezeichnet. Bei der Auswertung ergibt sich, dass die Beschriftung 98 "Hof" auf der Fahrbahn vorhanden ist. Da in der Datenbank steht, dass diese Fahrbahn nicht mehr nach Hof, sondern nach München (MUC) führt, wird eine Maske als Bild 100 ermittelt, die die Beschriftung 102 "Hof" dunkel lässt und eine Beschriftung 104 "MUC" verstärkt beleuchtet beziehungsweise projiziert. Es entsteht auf der Fahrbahn der Eindruck es wäre nur "MUC" als Beschriftung vorhanden. Dies ist mit der Darstellung 106 der Fahrbahn gezeigt.

Auch ein Ausblenden nicht gültiger Markierungen kann mittels der Erfindung erreicht werden. Die Ausblendung nicht gültiger Markierungen entspricht in weiten Teilen der Ausgestaltung gemäß Fig. 7, weshalb ergänzend hierauf verwiesen wird. Bei der Auswertung der Kameradaten bezüglich des Referenzbildes 16 wird nach Farbe der Markierung unterschieden. Sind gelbe Markierungen vorhanden, so werden diese ignoriert und die weißen Markierungen wie in bei der Ausgestaltung gemäß Fig. 7 aktiv ausgeblendet. Für den Fahrer bleiben vor allem die gelben Markierungen visuell sichtbar, weil diese im Gegensatz zu den weißen weiter vom Pixelscheinwerfer 10, 12 beleuchtet werden.

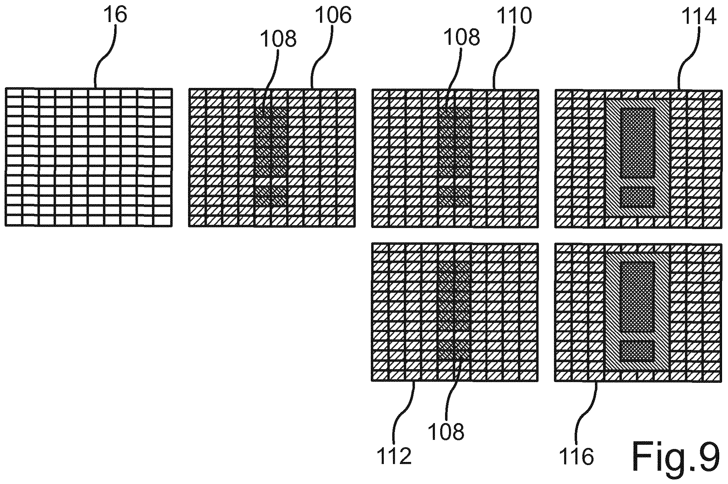

Fig. 9 zeigt ein weiteres Beispiel für den Einsatz der Erfindung, und zwar das Hervorheben einer hinweisenden Fahrbahnausstattung, hier ein auf der Fahrbahn angebrachtes Ausrufungszeichen 108. Mit 16 ist wieder das Referenzbild dargestellt. Die zugeordneten Kameradaten sind mit 106 bezeichnet. Durch das Auswerten der Kameradaten 106 wird ein Signalzeichen, hier das Ausrufungszeichen 108 ermittelt. Die weitere Auswertung ergibt, dass in der Datenbank Daten vorhanden sind, dass das Ausrufungszeichen 108 korrekt ist. Es wird daher versucht, den Fahrer darauf aufmerksam zu machen. In einem ersten Fall wird eine Maske als Bild 110 ermittelt, die die Fahrbahn beleuchtet, das Ausrufungszeichen 108 aber übermäßig beleuchtet. Dies führt zu einer Hervorhebung des Ausrufungszeichens 108 auf der Fahrbahn, was mit der Darstellung 112 gezeigt ist. In einem zweiten Fall wird ein Bereich um das Ausrufungszeichen 108 generiert, der dunkler, als die restliche Fahrbahnbeleuchtung ist und sich somit von der restlichen Fahrbahn abhebt. Ein entsprechendes darzustellendes Bild ist mit 114 bezeichnet. Das Ausrufungszeichen 108 selbst wird besonders beleuchtet. Daraus entsteht eine stark beleuchtete Beschriftung mit dunkler Umrandung auf der Fahrbahn, die durch den hohen Kontrast dem Fahrer leichter visuell auffällt. Dies ist anhand der Darstellung 116 gezeigt.

Insgesamt zeigen die Ausführungsbeispiele, wie durch die Erfindung eine verbesserte Beleuchtung des Fahrwegs, insbesondere der Fahrbahn, auf der das Kraftfahrzeug geführt wird, erreicht werden kann.

Die Ausführungsbeispiele dienen lediglich der Erläuterung der Erfindung und sollen diese nicht beschränken.

## Patentansprüche

1. Verfahren zum Steuern eines Pixelscheinwerfers eines auf einem Fahrweg angeordneten Kraftfahrzeugs, bei dem:
- der Pixelscheinwerfer (10, 12) abhängig von einem eine Bildfolge (14) repräsentierenden Steuersignal Licht (40) abgibt, um den Fahrweg zumindest teilweise zu beleuchten, zu welchem Zweck der Pixelscheinwerfer ausgebildet ist, nach Art eines Projektors Licht abzugeben, wobei das Steuersignal selbst von einer Steuersignaleinheit bereitgestellt wird, wobei das Steuersignal die Bildfolge (14) von Bildern (20, 22) nach Art einer Videosequenz repräsentiert, die dazu dienen, den Pixelscheinwerfer entsprechend zu steuern, wobei mit dem Pixelscheinwerfer ein jeweiliges Bild (20, 22) der Bildfolge (14), welches aktuell mittels des Steuersignals bereitgestellt wird, zum Steuern von Lichtquellen des Pixelscheinwerfers benutzt wird, wobei ein jeweiliges einzelnes Bild (20, 22) der Bildfolge (14) einer jeweiligen aktuell durch den Pixelscheinwerfer (10, 12) bereitzustellenden Lichtverteilung entspricht,
- der beleuchtete Fahrweg mittels einer Fahrzeugkamera erfasst wird, die entsprechende Kameradaten (18) bereitstellt, und
- die Kameradaten ausgewertet werden, um wenigstens eine hinweisgebende Fahrwegausstattung zu ermitteln und das Steuersignal zum Steuern des Pixelscheinwerfers (10, 12) abhängig von der ermittelten hinweisgebenden Fahrwegausstattung bereitzustellen,
- die Bildfolge (14) mit einer Bildfolgefrequenz von größer als 24 Hz bereitgestellt wird, wobei die Bildfolge (14) wenigstens ein Referenzbild (16) zum gleichmäßigen Beleuchten des Fahrwegs umfasst, sodass durch eine gleichmäßige Ausleuchtung der Fahrzeugumgebung auf einem vorgebbaren Beleuchtungsniveau die Möglichkeit geschaffen wird, den Fahrweg mit der Fahrzeugkamera zuverlässig zu erfassen, wobei das Referenzbild (16) in die Bildfolge (14) eingefügt wird oder ein bestehendes Bild der Bildfolge (14) ersetzt, sodass mittels des Referenzbilds (16) für einen kurzen Moment die gleichmäßige Beleuchtung bereitgestellt wird, wobei die Bildfolge (14) wiederholt Referenzbilder (16) umfasst, wobei aufeinanderfolgende Referenzbilder (16) mindestens 0,5 s voneinander zeitlich beabstandet sind, wobei das Referenzbild (16) dazu führt, dass die Lichtquellen des Pixelscheinwerfers derart angesteuert werden, dass sie Licht mit der gleichen Lichtstärke emittieren,
- die Fahrzeugkamera zum Erfassen des Fahrwegs bezüglich des Referenzbildes (16) synchronisiert wird,
- aus den bereitgestellten Kameradaten bezüglich des Referenzbildes (16) die wenigstens eine hinweisgebende Fahrwegausstattung sowie der hinweisgebenden Fahrwegausstattung zugeordnete Informationsdaten ermittelt werden, wie zum Beispiel Stopp-Zeichen, Richtungs-Pfeile, doppelte Fahrbahnmarkierungen (gelb/weiß), Warnhinweise und/oder Geschwindigkeitsangaben,
- die zugeordneten Informationsdaten mit Daten einer Datenbank verglichen werden, und
- das Steuersignal abhängig von dem Vergleich ermittelt wird.

2. Verfahren nach Anspruch 1,
**dadurch gekennzeichnet, dass**,
wenn die Informationsdaten von den Daten der Datenbank abweichen, die Bilder der Bildfolge derart ermittelt werden, dass eine den Daten der Datenbank entsprechende hinweisgebende Fahrwegausstattung mittels des Pixelscheinwerfers visuell erfassbar projiziert wird.

3. Verfahren nach Anspruch 2,
**dadurch gekennzeichnet, dass**
die ermittelte hinweisgebende Fahrwegausstattung von der projizierten hinweisgebenden Fahrwegausstattung zumindest teilweise visuell erfassbar überlagert wird.

4. Verfahren nach einem der vorhergehenden Ansprüche,
**dadurch gekennzeichnet, dass**
die ermittelte hinweisgebende Fahrwegausstattung in die projizierte hinweisgebende Fahrwegausstattung zumindest teilweise eingebettet wird.

5. Verfahren nach einem der vorhergehenden Ansprüche,
**dadurch gekennzeichnet, dass**,
wenn die Informationsdaten von den Daten der Datenbank abweichen, die Bilder der Bildfolge derart ermittelt werden, dass die ermittelte hinweisgebende Fahrwegausstattung höchstens teilweise beleuchtet wird.

6. Verfahren nach einem der vorhergehenden Ansprüche,
**dadurch gekennzeichnet, dass**
das Referenzbild (16) mittels eines den Pixelscheinwerfer (10, 12) steuernden Referenzsteuersignals bereitgestellt wird.

7. Verfahren nach einem der vorhergehenden Ansprüche,
**dadurch gekennzeichnet, dass**
das Referenzbild (16) mittels des Pixelscheinwerfers (10, 12) für eine Zeitdauer von weniger als 0,033 s bereitgestellt wird.

8. Steuereinrichtung zum Steuern eines Pixelscheinwerfers eines auf einem Fahrweg angeordneten Kraftfahrzeugs, mit:
- einer Steuersignaleinheit, die ausgebildet ist, ein eine Bildfolge (14) repräsentierendes Steuersignal für den Pixelscheinwerfer (10, 12) zum Beleuchten des Fahrwegs des Kraftfahrzeugs bereitzustellen, zu welchem Zweck der Pixelscheinwerfer ausgebildet ist, nach Art eines Projektors Licht abzugeben, wobei das Steuersignal die Bildfolge (14) von Bildern (20, 22) nach Art einer Videosequenz repräsentiert, die dazu dienen, den Pixelscheinwerfer entsprechend zu steuern, wobei mit dem Pixelscheinwerfer ein jeweiliges Bild (20, 22) der Bildfolge (14), welches aktuell mittels des Steuersignals bereitgestellt wird, zum Steuern von Lichtquellen des Pixelscheinwerfers benutzt wird, sodass der Pixelscheinwerfer (10, 12) Licht (40) abgibt, um den Fahrweg zumindest teilweise zu beleuchten, wobei ein jeweiliges einzelnes Bild (20, 22) der Bildfolge (14) einer jeweiligen aktuell durch den Pixelscheinwerfer (10, 12) bereitzustellenden Lichtverteilung entspricht,
- einer Empfangseinheit zum Empfangen von Kameradaten (18) einer den beleuchteten Fahrweg erfassende und die Kameradaten bereitstellende Fahrzeugkamera, und
- einer an die Steuersignaleinheit und die Empfangseinheit angeschlossene Auswerteeinheit zum Auswerten der Kameradaten (18), um wenigstens eine hinweisgebende Fahrwegausstattung zu ermitteln, damit die Steuersignaleinheit das Steuersignal abhängig von der ermittelten hinweisgebenden Fahrwegausstattung bereitstellt,
wobei
die Steuersignaleinheit ferner ausgebildet ist,
- die Bildfolge (14) mit einer Bildfolgefrequenz von größer als 24 Hz bereitzustellen, wobei die Bildfolge (14) wenigstens ein Referenzbild (16) zum gleichmäßigen Beleuchten des Fahrwegs umfasst, sodass durch eine gleichmäßige Ausleuchtung der Fahrzeugumgebung auf einem vorgebbaren Beleuchtungsniveau die Möglichkeit geschaffen wird, den Fahrweg mit der Fahrzeugkamera zuverlässig zu erfassen, wobei das Referenzbild (16) in die Bildfolge (14) eingefügt wird oder ein bestehendes Bild der Bildfolge (14) ersetzt, sodass mittels des Referenzbilds (16) für einen kurzen Moment die gleichmäßige Beleuchtung bereitgestellt wird, wobei die Bildfolge (14) wiederholt Referenzbilder (16) umfasst, wobei aufeinanderfolgende Referenzbilder (16) mindestens 0,5 s voneinander zeitlich beabstandet sind,
- die Fahrzeugkamera zum Erfassen des Fahrwegs bezüglich des Referenzbildes (16) zu synchronisieren und
- die Auswerteeinheit ausgebildet ist, aus den bereitgestellten Kameradaten bezüglich des Referenzbildes (16) die wenigstens eine hinweisgebende Fahrwegausstattung sowie der hinweisgebenden Fahrwegausstattung zugeordnete Informationsdaten zu ermitteln, wie zum Beispiel Stopp-Zeichen, Richtungs-Pfeile, doppelte Fahrbahnmarkierungen (gelb/weiß), Warnhinweise und/oder Geschwindigkeitsangaben, sowie
- die zugeordneten Informationsdaten mit Daten einer Datenbank zu vergleichen, und
- die Steuersignaleinheit ferner ausgebildet ist, das Steuersignal abhängig von dem Vergleich zu ermitteln.

9. Kraftfahrzeug mit einer Fahrzeugkamera, einem Pixelscheinwerfer (10, 12) und einer Steuereinrichtung zum Steuern eines Pixelscheinwerfers (10, 12),
**dadurch gekennzeichnet, dass**
die Steuereinrichtung nach Anspruch 8 ausgebildet ist.

## Claims

1. A method for controlling a pixel headlight of a motor vehicle arranged on a driveway, in which:
- the pixel headlight (10, 12) emits light (40) depending on a control signal representing an image sequence (14) to at least partially illuminate the driveway, for which purpose the pixel headlight is formed to emit light in the manner of a projector, wherein the control signal itself is provided by a control signal unit, wherein the control signal represents the image sequence (14) of images (20, 22) in the manner of a video sequence, which serve to correspondingly control the pixel headlight, wherein a respective image (20, 22) of the image sequence (14), which is currently provided by means of the control signal, is used with the pixel headlight for controlling light sources of the pixel headlight, wherein a respective individual image (20, 22) of the image sequence (14) corresponds to a respective light distribution currently to be provided by the pixel headlight (10, 12),
- the illuminated driveway is captured by means of a vehicle camera, which provides corresponding camera data (18), and
- the camera data is evaluated to ascertain at least one indicating driveway equipment, and to provide the control signal for controlling the pixel headlight (10, 12) depending on the ascertained indicating driveway equipment,
- the image sequence (14) is provided with an image sequence frequency of greater than 24 Hz, wherein the image sequence (14) includes at least one reference image (16) for uniformly illuminating the driveway, such that by uniform illumination of the vehicle environment at a presettable illumination level, the possibility of reliably capturing the driveway with the vehicle camera is provided, wherein the reference image (16) is inserted into the image sequence (14) or replaces an existing image of the image sequence (14), such that the uniform illumination is provided for a short moment by means of the reference image (16), wherein the image sequence (14) repeatedly includes reference images (16), wherein consecutive reference images (16) are spaced from each other in time by at least 0.5 s, wherein the reference image (16) results in the fact that the light sources of the pixel headlight are controlled such that they emit light with the same light intensity,
- the vehicle camera is synchronized with respect to the reference image (16) for capturing the driveway,
- from the provided camera data with respect to the reference image (16), the at least one indicating driveway equipment as well as information data associated with the indicating driveway equipment are ascertained, such as for example stop signs, directional arrows, double roadway markings (yellow/white), warning notices and/or speed indications,
- the associated information data is compared to data of a database, and
- the control signal is ascertained depending on the comparison.

2. The method according to claim 1,
**characterized in that**
if the information data deviates from the data of the database, the images of the image sequence are ascertained such that an indicating driveway equipment corresponding to the data of the database is visually detectably projected by means of the pixel headlight.

3. The method according to claim 2,
**characterized in that**
the ascertained indicating driveway equipment is at least partially visually detectably overlaid by the projected indicating driveway equipment.

4. The method according to any one of the preceding claims, **characterized in that**
the ascertained indicating driveway equipment is at least partially embedded in the projected indicating driveway equipment.

5. The method according to any one of the preceding claims, **characterized in that**
if the information data deviates from the data of the database, the images of the image sequence are ascertained such that the ascertained indicating driveway equipment is at most partially illuminated.

6. The method according to any one of the preceding claims, **characterized in that**
the reference image (16) is provided by means of a reference control signal controlling the pixel headlight (10, 12).

7. The method according to any one of the preceding claims, **characterized in that**
the reference image (16) is provided by means of the pixel headlight (10, 12) for a period of time of less than 0.033 s.

8. A control device for controlling a pixel headlight of a motor vehicle arranged on a driveway, comprising:
- a control signal unit, which is formed to provide a control signal representing an image sequence (14) for the pixel headlight (10, 12) for illuminating the driveway of the motor vehicle, for which purpose the pixel headlight is formed to emit light in the manner of a projector, wherein the control signal represents the image sequence (14) of images (20, 22) in the manner of a video sequence, which serve to correspondingly control the pixel headlight, wherein a respective image (20, 22) of the image sequence (14), which is currently provided by means of the control signal, is used with the pixel headlight for controlling light sources of the pixel headlight, such that the pixel headlight (10, 12) emits light (40), to at least partially illuminate the driveway, wherein a respective individual image (20, 22) of the image sequence (14) corresponds to a respective light distribution currently to be provided by the pixel headlight (10, 12),
- a receiving unit for receiving camera data (18) of a vehicle camera capturing the illuminated driveway and providing the camera data, and
- an evaluation unit connected to the control signal unit and the receiving unit for evaluating the camera data (18), to ascertain at least one indicating driveway equipment in order that the control signal unit provides the control signal depending on the ascertained indicating driveway equipment,
wherein
the control signal unit is further formed
- to provide the image sequence (14) with an image sequence frequency of greater than 24 Hz, wherein the image sequence (14) includes at least one reference image (16) for uniformly illuminating the driveway, such that by a uniform illumination of the vehicle environment at a presettable illumination level, the possibility of reliably capturing the driveway with the vehicle camera is provided, wherein the reference image (16) is inserted into the image sequence (14) or replaces an existing image of the image sequence (14), such that the uniform illumination is provided for a short moment by means of the reference image (16), wherein the image sequence (14) repeatedly includes reference images (16), wherein consecutive reference images (16) are spaced from each other in time by at least 0.5 s,
- to synchronize the vehicle camera with respect to the reference image (16) for capturing the driveway, and
- the evaluation unit is formed to ascertain the at least one indicating driveway equipment as well as information data associated with the indicating driveway equipment from the provided camera data with respect to the reference image (16), such as for example stop signs, directional arrows, double roadway markings (yellow/white), warning notices and/or speed indications, as well as
- to compare the associated information data to data of a database, and
- the control signal unit is further formed to ascertain the control signal depending on the comparison.

9. A motor vehicle with a vehicle camera, a pixel headlight (10, 12) and a control device for controlling a pixel headlight (10, 12),
**characterized in that**
the control device is formed according to claim 8.

## Revendications

1. Procédé de commande d'un phare à pixels d'un véhicule à moteur situé sur une voie de circulation, dans lequel :
- le phare à pixels (10, 12) émet de la lumière (40) en fonction d'un signal de commande représentant une séquence d'images (14), afin d'éclairer au moins partiellement la voie de circulation, le phare à pixels étant conçu pour émettre de la lumière en fonction du type de phare, le signal de commande étant lui-même fourni par une unité de signal de commande, le signal de commande représentant la séquence d'images (14) à partir d'images (20, 22) en fonction du type de séquence vidéo, lesquelles images servant à commander le phare à pixels en conséquence, une image (20, 22) respective de la séquence d'images (14) qui est actuellement fournie au moyen du signal de commande étant utilisée avec le phare à pixels afin de commander des sources de lumière du phare à pixels, une image individuelle (20, 22) respective de la séquence d'images (14) correspondant à une distribution de lumière respective à fournir actuellement par le phare à pixels (10, 12),
- la voie de circulation éclairée est détectée au moyen d'une caméra de véhicule qui fournit les données de caméra (18) correspondantes, et
- les données de caméra sont évaluées afin de déterminer au moins un équipement de voie de circulation informatif et de fournir le signal de commande pour commander le phare à pixels (10, 12) en fonction de l'équipement de voie de circulation informatif déterminé,
- la séquence d'images (14) est fournie avec une fréquence de séquence d'images supérieure à 24 Hz, la séquence d'images (14) comprenant au moins une image de référence (16) pour l'éclairage uniforme de la voie de circulation, de sorte qu'un éclairage uniforme de l'environnement de véhicule à un niveau d'éclairage prédéterminé permet de détecter la voie de circulation de manière fiable avec la caméra de véhicule, l'image de référence (16) étant insérée dans la séquence d'images (14) ou une image existante de la séquence d'images (14) étant remplacée de sorte que l'éclairage uniforme est fourni pendant un court moment au moyen de l'image de référence (16), la séquence d'images (14) comprenant des images de référence (16) répétées, des images de référence (16) consécutives étant espacées les unes des autres dans le temps d'au moins 0,5 s, l'image de référence (16) ayant pour résultat que les sources de lumière du phare à pixels sont commandées de telle sorte qu'elles émettent de la lumière ayant la même intensité lumineuse,
- la caméra de véhicule est synchronisée pour détecter la voie de circulation par rapport à l'image de référence (16),
- à partir des données de caméra fournies en ce qui concerne l'image de référence (16), le au moins un équipement de voie de circulation informatif ainsi que les données d'information associées à l'équipement de voie de circulation informatif sont déterminés, tels que, par exemple, des panneaux d'arrêt, des flèches de direction, des doubles marquages de voie de circulation (jaunes/blancs), des avertissements et/ou des indications de vitesse,
- les données d'information associées sont comparées à des données d'une base de données, et
- le signal de commande est déterminé en fonction de la comparaison.

2. Procédé selon la revendication 1,
**caractérisé en ce que**
lorsque les données d'information diffèrent des données de la base de données, les images de la séquence d'images sont déterminées de telle sorte qu'un équipement de voie de circulation informatif correspondant aux données de la base de données est projeté de manière à être visuellement perceptible au moyen du phare à pixels.

3. Procédé selon la revendication 2,
**caractérisé en ce que**
l'équipement de voie de circulation informatif déterminé est superposé à l'équipement de voie de circulation informatif projeté, de manière à être au moins partiellement perceptible.

4. Procédé selon l'une des revendications précédentes,
**caractérisé en ce que**
l'équipement de voie de circulation informatif déterminé est incorporé au moins partiellement dans l'équipement de voie de circulation informatif projeté.

5. Procédé selon l'une des revendications précédentes,
**caractérisé en ce que**
lorsque les données d'information diffèrent des données de la base de données, les images de la séquence d'images sont déterminées de telle sorte que l'équipement de voie de circulation informatif déterminé est au plus éclairé partiellement.

6. Procédé selon l'une des revendications précédentes,
**caractérisé en ce que**
l'image de référence (16) est fournie au moyen d'un signal de commande de référence commandant le phare à pixels (10, 12).

7. Procédé selon l'une des revendications précédentes,
**caractérisé en ce que**
l'image de référence (16) est fournie au moyen du phare à pixels (10, 12) pendant une durée inférieure à 0,033 s.

8. Dispositif de commande pour commander un phare à pixels d'un véhicule à moteur situé sur une voie de circulation, comportant :
- une unité de signal de commande conçue pour fournir un signal de commande représentant une séquence d'images (14) pour le phare à pixels (10, 12) afin d'éclairer la voie de circulation du véhicule à moteur, le phare à pixels étant conçu pour émettre de la lumière en fonction du type de phare, le signal de commande représentant la séquence d'images (14) à partir d'images (20, 22) en fonction du type de séquence vidéo, lesquelles images servant à commander le phare à pixels en conséquence, une image (20, 22) respective de la séquence d'images (14) qui est actuellement fournie au moyen du signal de commande afin de commander des sources de lumière du phare à pixels, étant utilisée avec le phare à pixels de telle sorte que le phare à pixels (10, 12) émet de la lumière (40) afin d'éclairer au moins partiellement la voie de circulation, une image individuelle (20, 22) respective de la séquence d'images (14) correspondant à une distribution de lumière respective à fournir actuellement par le phare à pixels (10, 12),
- une unité de réception pour recevoir des données de caméra (18) d'une caméra de véhicule capturant la voie de circulation éclairée et fournissant les données de caméra, et
- une unité d'évaluation reliée à l'unité de signal de commande et à l'unité de réception pour évaluer les données de caméra (18) afin de déterminer au moins un équipement de voie de circulation informatif, l'unité de signal de commande fournissant ainsi le signal de commande en fonction de l'équipement de voie de circulation informatif déterminé,
l'unité de signal de commande étant également conçue pour
- fournir la séquence d'images (14) avec une fréquence de séquence d'images supérieure à 24 Hz, la séquence d'images (14) comprenant au moins une image de référence (16) pour l'éclairage uniforme de la voie de circulation, de sorte qu'un éclairage uniforme de l'environnement de véhicule à un niveau d'éclairage prédéterminé permet de détecter la voie de circulation de manière fiable avec la caméra de véhicule, l'image de référence (16) étant insérée dans la séquence d'images (14) ou une image existante de la séquence d'images (14) étant remplacée de sorte que l'éclairage uniforme est fourni pendant un court moment au moyen de l'image de référence (16), la séquence d'images (14) comprenant des images de référence (16) répétées, des images de référence (16) consécutives étant espacées les unes des autres dans le temps d'au moins 0,5 s,
- synchroniser la caméra de véhicule pour détecter la voie de circulation par rapport à l'image de référence (16) et
- l'unité d'évaluation étant conçue pour déterminer, à partir des données de caméra fournies en ce qui concerne l'image de référence (16), le au moins un équipement de voie de circulation informatif ainsi que les données d'information associées à l'équipement de voie de circulation informatif, tels que, par exemple, des panneaux d'arrêt, des flèches de direction, des doubles marquages de voie de circulation (jaunes/blancs), des avertissements et/ou des indications de vitesse, et
- comparer les données d'information associées avec des données d'une base de données, et
- l'unité de signal de commande étant en outre conçue pour déterminer le signal de commande en fonction de la comparaison.

9. Véhicule à moteur comportant une caméra de véhicule, un phare à pixels (10, 12) et un dispositif de commande pour commander un phare à pixels (10, 12),
**caractérisé en ce que**
le dispositif de commande est réalisé selon la revendication 8.
